# EUROPÄISCHE PATENTSCHRIFT

(11) **EP 1 817 090 B1**
(45) Veröffentlichungstag und Bekanntmachung des Hinweises auf die Patenterteilung: **09.04.2008**
(21) Anmeldenummer: 05813780.3
(22) Anmeldetag: 21.11.2005
(51) Int. Cl.: B01D 3/36, B01D 3/40

(54) **VERFAHREN ZUR CHEMISCHEN UMSETZUNG UND AUFTRENNUNG EINES GEMISCHES IN EINER KOLONNE**
METHOD FOR CHEMICALLY REACTING AND SEPARATING A MIXTURE IN A COLUMN
PROCEDE DE REACTION ET DE SEPARATION CHIMIQUES D'UN MELANGE DANS UNE COLONNE

(30) Priorität: 24.11.2004 DE 102004056672
(43) Veröffentlichungstag der Anmeldung: 15.08.2007
(73) Patentinhaber: BASF SE, 67056 Ludwigshafen (DE)
(72) Erfinder: BESTE, York Alexander, 68161 Mannheim (DE); EGGERSMANN, Markus, 68167 Mannheim (DE); SCHOENMAKERS, Hartmut, 69221 Dossenheim (DE)
(86) Internationale Anmeldenummer: PCT/EP2005/012426
(87) Internationale Veröffentlichungsnummer: WO 2006/056378

(56) Entgegenhaltungen:
- WO-A-83/03825
- WO-A-02/074718

## Beschreibung

Die vorliegende Erfindung betrifft ein verbessertes Verfahren zur chemischen Umsetzung und Auftrennung eines Gemisches in einer Kolonne.

Es ist bekannt, dass bei Verfahren zur chemischen Umsetzung und Auftrennung von Gemischen Reaktion und Destillation in bestimmten Fällen vorteilhaft überlagert werden können. Diese Verfahrensweise nennt man Reaktivdestillation. Sie wird in Ullmanns's Processes and Process Engineering, Volume 1 (2004), Seite 259 ff beschrieben. Vorteile sind die Erhöhung des Reaktionsumsatzes bei gleichgewichtslimitierten Reaktionen und/oder die Erhöhung der Selektivität. Hinzu kommt, dass zwei Apparate (Reaktor und Destillationskolonne) zusammengelegt werden können. Insgesamt ergibt sich eine Einsparung an Energie- und Investitionskosten. Die Reaktivdestillation kann angewendet werden, wenn die Reaktionsprodukte durch die Destillation abgetrennt und die Edukte in die Reaktionszone zurückgedrängt werden. Dazu muss ein passendes Siedeverhalten vorliegen, d.h. die Produkte müssen entweder die absoluten Leicht- oder Schwersieder und die Edukte aber auch entstehende Nebenkomponenten müssen die Mittelsieder sein.

Nachteil bei diesem Verfahren ist, dass die Siedereihenfolge nur bei wenigen Stoffsystem so gut passt, dass das Verfahren anwendbar ist. Bildet das Kopfprodukt z.B. ein Azeotrop oder lässt sich schlecht trennen von einem Edukt, so wird das Edukt mit dem Produkt über Kopf abgezogen. Um reines Produkt zu erhalten, muss es in einem Folgeschritt aufwändig vom Edukt getrennt und in den Reaktionsteil der Kolonne zurückgeführt werden.

Eine relativ neue Möglichkeit, das Produkt rein zu gewinnen, ist die Extraktivdestillation mit ionischen Flüssigkeiten. Durch den Einsatz von ionischen Flüssigkeiten als Entrainer erreicht man häufig eine sehr effiziente Trennung von Azeotropen oder engsiedenden Gemischen. Das führt dazu, dass im Vergleich zu herkömmlichen Entrainern weniger ionische Flüssigkeit benötigt wird und/oder die Kolonne mit weniger Trennstufen ausgerüstet werden kann, um die gleiche Trennleistung zu erzielen. Auch Energiekosten können eingespart werden, da insgesamt weniger Entrainer benötigt wird und die Aufarbeitung aufgrund des großen Trennfaktors günstiger ist.

Im der Patentschrift WO 02/074718 wurde ein Verfahren zur Trennung von Flüssigkeiten offenbart, bei welchem man die Trennung mittels einer Extraktiv-Rektifikation durch Zugabe einer ionischen Flüssigkeit als Entrainer verbessert.

In der Literatur sind verschiedene Ansätze zur Kombination von Reaktivdestillation bzw. Reaktion mit der Extraktivdestillation vorhanden.

In Jimenez and Costa-Lopez (Industrial & Engineering Chemistry Research (2002), 41 (26), 6735-6744) wird O-Xylen als Entrainer eingesetzt um bei der Umesterung von Methylacetat mit n-Butanol zu Butylacetat und Methanol in der Reaktionskolonne das Azeotrop Methylacetat/Methanol zu brechen. Dieser Prozess ist laut eigenen Angaben nicht wirtschaftlich.

In WO 83/03825 wird die Herstellung von Methylacetat über die Veresterung von Methanol mit Essigsäure beschrieben. Das Edukt Essigsäure wirkt in diesem Prozess gleichzeitig als Entrainer. Hier handelt es sich um einen stoffsystemspezifischen Zufall, dass die Essigsäure sowohl als Edukt als auch als Entrainer verwendet werden kann.

Im Falle der Umsetzung bzw. Auftrennung von Gemischen, bei welchen der Trennfaktor zwischen einem Produkt und einem Edukt bzw. einer Nebenkomponente nur relativ klein ist oder gar ein Azeotrop vorliegt, können die bekannten Verfahren, bei welchen eine Reaktion und eine Trennung überlagert werden, hinsichtlich ihrer Effektivität nicht überzeugen. So können je nach konkreter Aufgabenstellung nur relativ niedrige Reinheiten gewonnen werden, es bilden sich unerwünschte Nebenprodukte und es müssen in manchen Fällen aufwändige Trennvorrichtungen realisiert werden, was sich z.B. in der benötigten Trennstufenzahl der Kolonne dokumentiert.

Demgemäß wurde ein Verfahren zur chemischen Umsetzung und Auftrennung eines Gemisches in einer Kolonne gefunden, welches dadurch gekennzeichnet ist, dass man in der Kolonne einer Reaktivdestillation zumindest teilweise eine Extraktivdestillation überlagert und eine ionische Flüssigkeit als Entrainer in die Kolonne leitet. Die simultane Durchführung einer Reaktivdestillation sowie einer Extraktivdestillation in einer Kolonne in Gegenwart einer ionischen Flüssigkeit als Entrainer hat sich hierbei nicht nur als verfahrenstechnisch beherrschbar erwiesen, sondern erwies sich auch gegenüber bekannten, alternativen Verfahren als vorteilhaft.

Unter ionischen Flüssigkeiten werden hierbei solche verstanden, wie sie von Wasserscheid und Keim in der Angewandten Chemie 2000, 112, 3926-3945 definiert sind. Die Stoffgruppe der ionischen Flüssigkeiten stellt ein neuartiges Lösungsmittel dar. Wie in der genannten Druckschrift aufgeführt handelt es sich bei ionischen Flüssigkeiten um bei relativ niedrigen Temperaturen schmelzende Salze mit nichtmolekularem, ionischen Charakter. Sie sind bereits bei relativ niedrigen Temperaturen kleiner 200°C, bevorzugt kleiner 150°C, besonders bevorzugt kleiner 100°C flüssig und dabei relativ niedrigviskos. Sie besitzen sehr gute Löslichkeiten für eine große Anzahl organischer, anorganischer und polymerer Substanzen.

Ionische Flüssigkeiten besitzen häufig einen Schmelzpunkt unterhalb von 0°C, im Einzelfall bis -96°C, was wichtig für die industrielle Umsetzung der Extraktivrektifikation ist.

Darüber hinaus sind ionische Flüssigkeiten in der Regel nicht brennbar, nicht korrosiv und wenig viskos und zeichnen sich durch einen nicht messbaren Dampfdruck aus.

Als ionische Flüssigkeiten werden erfindungsgemäß solche Verbindungen bezeichnet, die mindestens eine positive und mindestens eine negative Ladung aufweisen, insgesamt jedoch ladungsneutral sind.

Die Ionischen Flüssigkeiten können auch mehrere positive oder negative Ladungen aufweisen, beispielsweise 1 bis 5, bevorzugt 1 bis 4, besonders bevorzugt 1 bis 3, ganz besonders bevorzugt 1 bis 2, insbesondere jedoch je eine positive und negative Ladung.

Die Ladungen können sich an verschiedenen lokalisierten oder delokalisierten Bereichen innerhalb eines Moleküls befinden, also betainartig, oder auf je ein getrenntes Anion und Kation verteilt sein. Bevorzugt sind solche Ionischen Flüssigkeiten, die aus mindestens einem Kation und mindestens einem Anion aufgebaut sind. Kation und Anion können, wie oben ausgeführt, ein oder mehrfach, bevorzugt einfach geladen sein.

Selbstverständlich sind auch Gemische verschiedener ionischer Flüssigkeiten oder Mischungen aus herkömmlichen Entrainern, wie z.B. n-Methylpyrrolidon, n-Formylmorpholin, Ethylenglykol, Propylenglykol, Dimethylformamid, Ethandiol, Benzol, Cyclohexan, Wasser usw., mit Ionischen Flüssigkeiten denkbar.

Ionische Flüssigkeiten im Sinne der vorliegenden Erfindung sind Salze der allgemeinen Formel

[A]ₙ⁺ [Y]ⁿ⁻

wobei n = 1, 2, 3 oder 4 ist,
oder gemischte Spezies der allgemeinen Formel
[A¹]⁺[A²]⁺ [Y]²⁻, [A¹]⁺[A²]⁺[A³]⁺ [Y]³⁻ oder [A¹]⁺[A²]⁺[A³]⁺[A⁴]⁺ [Y]⁴⁻
wobei A¹, A², A³ und A⁴ unabhängig voneinander aus den für [A] genannten Gruppen ausgewählt sind,
oder gemischte Spezies mit Metallkationen
[A¹]⁺[A²]⁺[A³]⁺[M¹]⁺ [Y]⁴⁻, [A¹]⁺[A²]⁺[M¹]⁺[M²]⁺ [Y]⁴⁻,
[A¹]⁺[M¹]⁺[M²]⁺[M³]⁺ [Y]⁴⁻, [A¹]⁺[A²]⁺[M¹]⁺ [Y]³⁻, [A¹]⁺[M¹]⁺[M²]⁺ [Y]³⁻,
[A¹]⁺[M¹]⁺ [Y]²⁻, [A¹]⁺[A²]⁺[M⁴]²⁺ [Y]⁴⁻, [A¹]⁺[M¹]⁺[M⁴]²⁺ [Y]⁴⁻,
[A¹]⁺[M⁵]³⁺ [Y]⁴⁻, [A¹]⁺[M⁴]²⁺ [Y]³⁻
wobei M¹, M², M³ einwertige Metallkationen, M⁴ zweiwertige Metallkationen und M⁵ dreiwertige Metallkationen darstellen.

Verbindungen, die sich zur Bildung des Kations [A]ₙ⁺ von ionischen Flüssigkeiten eignen, sind z.B. aus DE 102 02 838 A1 bekannt. So können solche Verbindungen Sauerstoff-, Phosphor-, Schwefel- oder insbesondere Stickstoffatome enthalten, beispielsweise mindestens ein Stickstoffatom, bevorzugt 1-10 Stickstoffatome, besonders bevorzugt 1-5, ganz besonders bevorzugt 1-3 und insbesondere 1-2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Bei der Synthese der ionischen Flüssigkeiten wird zunächst durch Quaternisierung am Stickstoffatom etwa eines Amins oder Stickstoff-Heterocyclus' ein Kation erzeugt. Die Quaternisierung kann durch Protonierung oder Alkylierung des Stickstoffatoms erfolgen. Je nach verwendetem Protonierungs- bzw. Alkylierungsreagens werden Salze mit unterschiedlichen Anionen erhalten. In Fällen, in denen es nicht möglich ist, das gewünschte Anion bereits bei der Quaternisierung zu bilden, erfolgt dies in einem weiteren Syntheseschritt. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Ausfällung des gebildeten Metallhalogenids, über einen lonenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926 - 3945 und der darin zitierten Literatur beschrieben.

Geeignete Alkylreste, mit denen das Stickstoffatom in den Aminen oder Stickstoff-Heterocyclen quaternisiert ist, sind C₁ bis C₁₈ -Alkyl, bevorzugt C₁ bis C₁₀-Alkyl, besonders bevorzugt C₁ bis C₆-Alkyl und ganz besonders bevorzugt Methyl.

Bevorzugt sind solche Verbindungen, die mindestens einen fünf- bis sechsgliedrigen Heterocyclus enthalten, der mindestens ein Stickstoffatom sowie gegebenenfalls ein Sauerstoff- oder Schwefelatom aufweist, besonders bevorzugt sind solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit zwei Stickstoffatomen.

Besonders bevorzugte Verbindungen sind solche, die ein Molgewicht unter 1000 g/mol aufweisen, ganz besonders bevorzugt unter 500 g/mol und insbesondere unter 250 g/mol.

Weiterhin sind solche Kationen bevorzugt, die ausgewählt sind aus den Verbindungen der Formeln (Ia) bis (It), 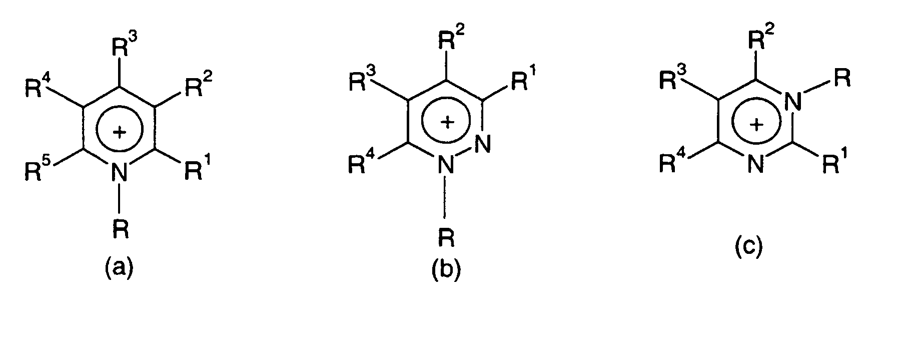 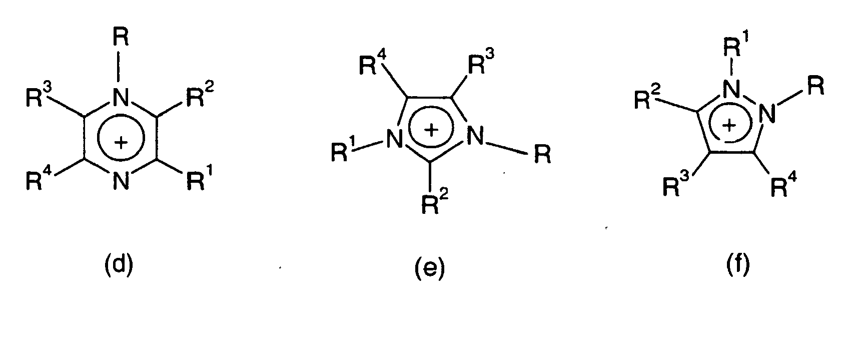 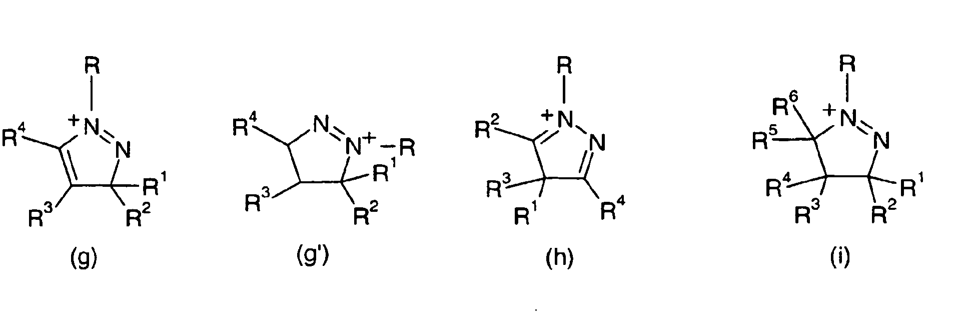 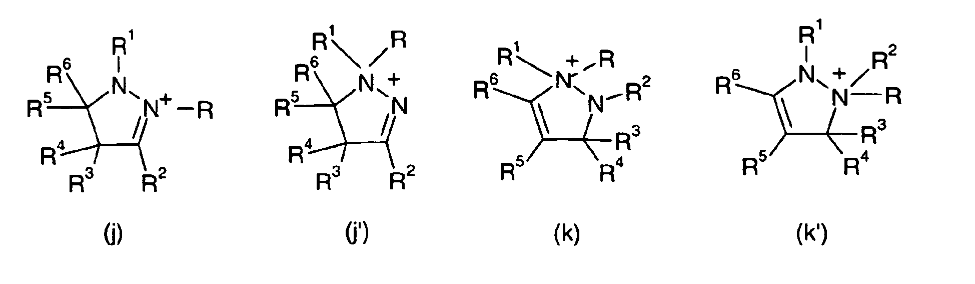 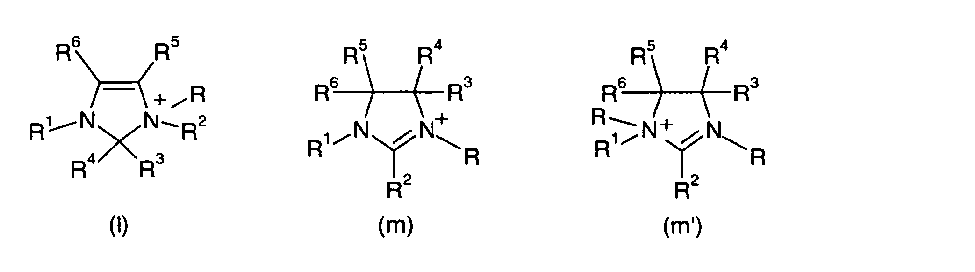 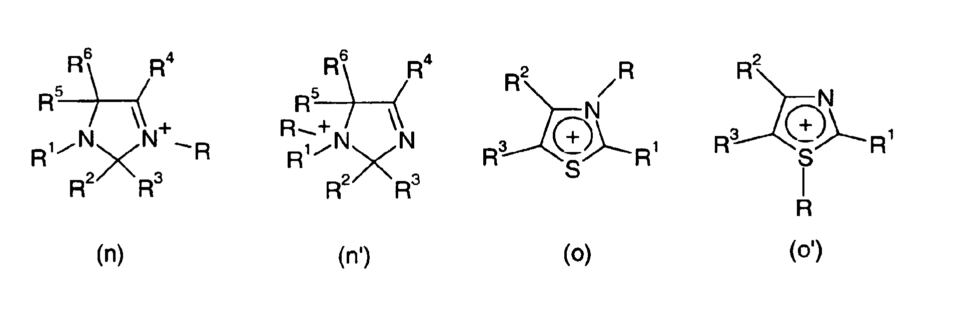 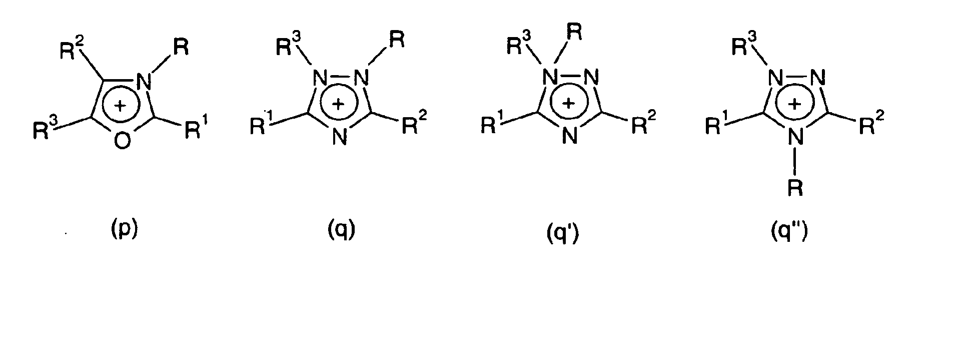 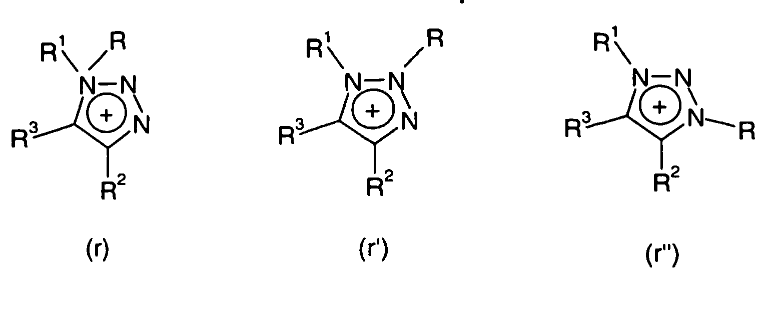 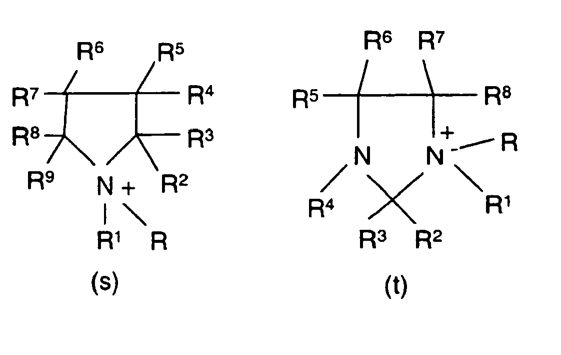 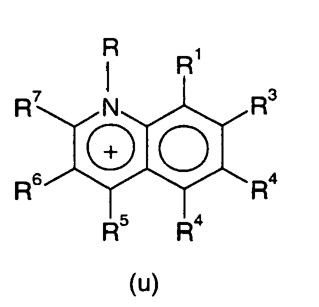 sowie Oligo- bzw. Polymere, die diese Strukturen enthalten, worin die Substituenten und Indices folgende Bedeutung haben:
R ist Wasserstoff oder ein C₁ bis C₁₈ -Alkylrest, bevorzugt ein C₁ bis C₁₀-Alkylrest, besonders bevorzugt ein C₁ bis C₆-Alkylrest, beispielsweise Methyl, Ethyl, n-Propyl, Isopropyl, n-Butyl, sec-Butyl, tert.Butyl, n-Pentyl (n-Amyl), 2-Pentyl (sek-Amyl), 3-Pentyl, 2,2-Dimethyl-prop-1-yl (neo-Pentyl) und n-Hexyl, und ganz besonders bevorzugt Methyl.
R¹, R², R³, R⁴, R⁵, R⁶, R⁷, R⁸ und R⁹ unabhängig voneinander jeweils Wasserstoff, C₁-C₁₈-Alkyl, gegebenenfalls durch ein oder mehrere nicht-benachbarte Sauerstoff-und/oder Schwefelatome und/oder ein oder mehrere substituierte oder unsubstituierte Iminogruppen unterbrochenes C₂-C₁₈-Alkyl, C₆-C₁₄-Aryl, C₅-C₁₂-Cycloalkyl oder ein fünf- bis sechsgliedriger, Sauerstoff-, Stickstoff- und/oder Schwefelatome aufweisender Heterocyclus, wobei zwei von ihnen auch gemeinsam einen ungesättigten, gesättigten oder aromatischen, gegebenenfalls durch ein oder mehrere nicht-benachbarte Sauerstoff- und/oder Schwefelatome und/oder ein oder mehrere substituierte oder unsubstituierte Iminogruppen unterbrochenen Ring bilden können, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

Gegebenenfalls durch funktionelle Gruppen, Aryl, Alkyl, Aryloxy, Alkyloxy, Halogen, Heteroatome und/oder Heterocyclen substituiertes C₁-C₁₈-Alkyl ist beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2,2-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl, 1,2-Di-(methoxycarbonyl)ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenlythioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl bedeutet beispielsweise 5-Hydroxy-3-oxapentyl, 8-Hydroxy-3,6-dioxa-octyl, 11-Hydroxy-3,6,9-trioxa-undecyl, 7-Hydroxy-4-oxaheptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxaoctyl, 11-Ethoxy-3,6,9-trioxa-undecyl, 7-Ethoxy-4-oxa-heptyl, 11-Ethoxy-4,8-dioxaundecyl, 15-Ethoxy-4,8,12-trioxa-pentadecyl, 9-Ethoxy-5-oxa-nonyl oder 14-Ethoxy-5,10-oxa-tetradecyl .

Bilden zwei Reste einen Ring, so können diese Reste gemeinsam beispielsweise als anellierter Baustein 1,3-Propylen, 1,4-Butylen, 2-Oxa-1,3-propylen, 1-Oxa-1,3-propylen, 2-Oxa-1,3-propenylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen bilden.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rest oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methylimino-, iso-Propylimino, n-Butylimino oder tert-Butylimino sein.

Unter dem Begriff "funktionelle Gruppen" sind beispielsweise die folgenden zu verstehen: Carboxy, Carboxamid, Hydroxy, Di-(C₁-C₄-Alkyl)-amino, C₁-C₄-Alkyloxycarbonyl, Cyano oder C₁-C₄-Alkoxy. Dabei ist C₁ bis C₄-Alkyl Methyl, Ethyl, Propyl, Isopropyl, n-Butyl, sec-Butyl oder tert.-Butyl.

Gegebenenfalls durch funktionelle Gruppen, Aryl, Alkyl, Aryloxy, Alkyloxy, Halogen, Heteroatome und/oder Heterocyclen substituiertes C₆-C₁₄-Aryl bedeutet beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4-oder 2,6-Dinitrophenyl, 4-Dimethylaminophenyl, 4-Acetylphenyl, Methoxyethylphenyl oder Ethoxymethylphenyl.

Gegebenenfalls durch funktionelle Gruppen, Aryl, Alkyl, Aryloxy, Halogen, Heteroatome und/oder Heterocyclen substituiertes C₅-C₁₂-Cycloalkyl bedeutet beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie Norbornyl oder Norbornenyl.

Ein durch die entsprechenden Gruppen gegebenenfalls substituierter fünf- bis sechsgliedriger, Sauerstoff-, Stickstoff- und/oder Schwefelatome aufweisender Heterocyclus ist beispielsweise Furyl, Thiophenyl, Pyrryl, Pyridyl, Indolyl, Benzoxazolyl, Dioxolyl, Dioxyl, Benzimidazolyl, Dimethylpyridyl, Methylchinolyl, Dimethylpyryl Methoxyfuryl, Dimethoxypyridyl, Difluorpyridyl, Methylthiophenyl, Isopropylthiophenyl oder tert.-Butylthiophenyl.

Bevorzugt sind R¹, R², R³, R⁴, R⁵, R⁶, R⁷, R⁸ und R⁹ unabhängig voneinander Wasserstoff, Methyl, Ethyl, n-Butyl, 2-Hydroxyethyl, 2-Cyanoethyl, 2-(Methoxycarbonyl)ethyl, 2-(Ethoxycarbonyl)ethyl, 2-(n-Butoxycarbonyl)ethyl, Dimethylamino, Diethylamino und Chlor.

Besonders bevorzugte Pyridiniumionen (Ia) sind solche, bei denen einer der Reste R¹ bis R⁵ Methyl, Ethyl oder Chlor ist und alle anderen Wasserstoff sind, oder R³ Dimethylamino und alle anderen Wasserstoff sind, oder alle Wasserstoff sind, oder R² Carboxy oder Carboxamid und alle anderen Wasserstoff, oder R¹ und R² oder R² und R³ 1,4-Buta-1,3-dienylen und alle anderen Wasserstoff sind.

Besonders bevorzugte Pyridaziniumionen (Ib) sind solche, bei denen einer der Reste R¹ bis R⁴ Methyl oder Ethyl und alle anderen Wasserstoff oder alle Wasserstoff sind.

Besonders bevorzugte Pyrimidiniumionen (Ic) sind solche, bei denen R² bis R⁴ Wasserstoff oder Methyl und R¹ Wasserstoff, Methyl oder Ethyl ist, oder R² und R⁴ Methyl, R³ Wasserstoff und R¹ Wasserstoff, Methyl oder Ethyl ist.

Besonders bevorzugte Pyraziniumionen (Id) sind solche, bei denen R¹ bis R⁴ alle Methyl oder alle Wasserstoff sind.

Besonders bevorzugte Imidazoliumionen (Ie) sind solche, bei denen unabhängig voneinander R¹ ausgewählt ist unter Methyl, Ethyl, n-Propyl, n-Butyl, n-Pentyl, n-Octyl, 2-Hydroxyethyl oder 2-Cyanoethyl und R² bis R⁴ unabhängig voneinander Wasserstoff, Methyl oder Ethyl bedeuten.

Besonders bevorzugte Pyrazoliumionen (If) sind solche, bei denen unabhängig voneinander R¹ unter Wasserstoff, Methyl und Ethyl, R², R³ und R⁴ aus Wasserstoff und Methyl ausgewählt sind.

Besonders bevorzugte Pyrazoliumionen (Ig) bzw. (Ig') sind solche, bei denen unabhängig voneinander R¹ aus Wasserstoff, Methyl und Ethyl und R², R³ und R⁴ aus Wasserstoff und Methyl ausgewählt sind.

Besonders bevorzugte Pyrazoliumionen (Ih) sind solche, bei denen unabhängig voneinander R¹ bis R⁴ unter Wasserstoff und Methyl, ausgewählt sind.

Besonders bevorzugte 1-Pyrazoliniumionen (Ii) sind solche, bei denen unabhängig voneinander R¹ bis R⁶ aus Wasserstoff und Methyl ausgewählt sind.

Besonders bevorzugte 2-Pyrazoliniumionen (Ij) bzw. (Ij') sind solche, bei denen unabhängig voneinander R¹ unter Wasserstoff, Methyl, Ethyl und Phenyl und R² bis R⁶ aus Wasserstoff und Methyl ausgewählt sind.

Besonders bevorzugte 3-Pyrazoliniumionen (Ik) sind solche, bei denen unabhängig voneinander R¹ und R² aus Wasserstoff, Methyl, Ethyl und Phenyl und R³ bis R⁶ aus Wasserstoff und Methyl ausgewählt sind.

Besonders bevorzugte Imidazoliniumionen (11) sind solche, bei denen unabhängig voneinander R¹ und R² aus Wasserstoff, Methyl, Ethyl, n-Butyl und Phenyl und R³ und R⁴ aus Wasserstoff, Methyl und Ethyl und R⁵ oder R⁶ aus Wasserstoff und Methyl ausgewählt sind.

Besonders bevorzugte Imidazoliniumionen (Im) bzw. (Im') sind solche, bei denen unabhängig voneinander R¹ und R² unter Wasserstoff, Methyl und Ethyl und R³ bis R⁶ aus Wasserstoff und Methyl ausgewählt sind.

Besonders bevorzugte Imidazoliniumionen (In) bzw. (In') sind solche, bei denen unabhängig voneinander R¹, R² und R³ aus Wasserstoff, Methyl und Ethyl und R⁴ bis R⁶ aus Wasserstoff und Methyl ausgewählt sind.

Besonders bevorzugte Thiazoliumionen (Io) bzw. (Io') oder Oxazoliumionen (Ip) bzw. (Ip') sind solche, bei denen unabhängig voneinander R¹ aus Wasserstoff, Methyl, Ethyl und Phenyl und R² und R³ aus Wasserstoff und Methyl ausgewählt sind.

Besonders bevorzugte 1,2,4-Triazoliumionen (Iq) sind solche, bei denen unabhängig voneinander R¹ und R² aus Wasserstoff, Methyl, Ethyl und Phenyl und R³ aus Wasserstoff, Methyl und Phenyl ausgewählt sind.

Besonders bevorzugte 1,2,3-Triazoliumionen (Ir), (Ir') bzw. (Ir") sind solche, bei denen unabhängig voneinander R¹ aus Wasserstoff, Methyl und Ethyl und R² und R³ aus Wasserstoff und Methyl ausgewählt sind oder R² und R³ 1,4-Buta-1,3-dienylen und alle anderen Wasserstoff sind.

Besonders bevorzugte Pyrrolidiniumionen (Is) sind solche, bei denen unabhängig voneinander R¹ aus Wasserstoff, Methyl, Ethyl und Phenyl und R² bis R⁹ aus Wasserstoff und Methyl ausgewählt sind.

Besonders bevorzugte Imidazolidiniumionen (It) sind solche, bei denen unabhängig voneinander R¹ und R⁴ aus Wasserstoff, Methyl, Ethyl und Phenyl und R² und R³ sowie R⁵ bis R⁸ aus Wasserstoff und Methyl ausgewählt sind.

Besonders bevorzugte Quinoliniumiumionen (Iu) sind solche, bei denen unabhängig voneinander R und R7 aus Wasserstoff, Methyl, Ethyl, n-Butyl, Phenyl, Octyl und Decyl und R¹ bis R⁶ aus Wasserstoff und Methyl ausgewählt sind.

Unter den vorstehend genannten heterocyclischen Kationen sind die Pyridiniumionen und die Imidazoliniumionen bevorzugt.

Ganz besonders bevorzugt sind Imidazoliniumionen (le), bei denen R, R¹ und R² unabhängig voneinander ausgewählt sind unter Wasserstoff, Methyl, Ethyl und Butyl und R³ und R⁴ Wasserstoff sind.

Weiterhin geeignete Kationen sind quartäre Ammoniumionen der Formel (II)

NRR^{a}R^{b}R^{c+} (II)

und quartäre Phosphoniumionen der Formel (III)

PRR^{a}R^{b}R^{c+} (III).

R^{a}, R^{b} und R^{c} bedeuten unabhängig voneinander jeweils C₁-C₁₈-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl, C₆-C₁₄-Aryl oder C₅-C₁₂-Cycloalkyl oder einen fünf- bis sechsgliedrigen, Sauerstoff-, Stickstoff- und/oder Schwefelatome aufweisenden Heterocyclus oder zwei davon, die gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können, mit der Maßgabe, dass mindestens zwei der drei Reste R^{a}, R^{b} und R^{c} unterschiedlich sind und die Reste R^{a}, R^{b} und R^{c} zusammen mindestens 8, bevorzugt mindestens 10, besonders bevorzugt mindestens 12 und ganz besonders bevorzugt mindestens 13 Kohlenstoffatome aufweisen.

Darin bedeutet R Wasserstoff oder einen C₁ bis C₁₈ -Alkylrest, bevorzugt einen C₁ bis C₁₀-Alkylrest, besonders bevorzugt einen C₁ bis C₆-Alkylrest, beispielsweise Methyl, Ethyl, n-Propyl, Isopropyl, n-Butyl, sec-Butyl, tert.Butyl, n-Pentyl (n-Amyl), 2-Pentyl (sek-Amyl), 3-Pentyl, 2,2-Dimethyl-prop-1-yl (neo-Pentyl) und n-Hexyl, und ganz besonders bevorzugt Methyl.

Bevorzugt sind R^{a}, R^{b} und R^{c} unabhängig voneinander jeweils C₁-C₁₈-Alkyl, C₆-C₁₂-Aryl oder C₅-C₁₂-Cycloalkyl und besonders bevorzugt C₁-C₁₈-Alkyl, wobei die genannten Reste jeweils durch funktionelle Gruppen, Aryl, Alkyl, Aryloxy, Alkyloxy, Halogen, Heteroatome und/oder Heterocyclen substituiert sein können.

Beispiele für die jeweiligen Gruppen sind bereits oben aufgeführt.

Bevorzugt sind die Reste R^{a}, R^{b} und R^{c} Methyl, Ethyl, n-Propyl, Isopropyl, n-Butyl, sec-Butyl, tert.Butyl, n-Pentyl (n-Amyl), 2-Pentyl (sek-Amyl), 3-Pentyl, 2,2-Dimethyl-prop-1-yl (neo-Pentyl), n-Hexyl, n-Heptyl, n-Octyl, iso-Octyl, 2-Ethylhexyl, 1,1-Dimethylpropyl, 1,1-Dimethylbutyl, Benzyl, 1-Phenylethyl, 2-Phenylethyl, (,(-Dimethylbenzyl, Phenyl, Tolyl, Xylyl, α-Naphthyl, β-Naphthyl, Cyclopentyl oder Cyclohexyl.

Bilden zwei Reste R^{a}, R^{b} und R^{c} eine Kette, so kann dies beispielsweise 1,4-Butylen oder 1,5-Pentylen sein.

Beispiele für die tertiären Amine, von denen sich die quatären Ammoniumionen der allgemeinen Formel (II) durch Quaternisierung mit den genannten Resten R ableiten, sind Diethyl-n-butylamin, Diethyl-tert-butylamin, Diethyl-n-pentylamin, Diethyl-hexylamin, Diethyloctylamin, Diethyl-(2-ethylhexyl)-amin, Di-n-propylbutylamin, Di-n-propyl-n-pentylamin, Di-n-propylhexylamin, Di-n-propyloctylamin, Di-n-propyl-(2-ethylhexyl)-amin, Di-isopropylethylamin, Di-iso-propyl-n-propylamin, Di-isopropyl-butylamin, Diisopropylpentylamin, Di-iso-propylhexylamin, Di-isopropyloctylamin, Di-iso-propyl-(2-ethylhexyl)-amin, Di-n-butylethylamin, Di-n-butyl-n-propylamin, Di-n-butyl-n-pentylamin, Di-n-butylhexylamin, Di-n-butyloctylamin, Di-n-butyl-(2-ethylhexyl)-amin, N-n-Butylpyrrolidin, N-sek-Butylpyrrolidin, N-tert-Butylpyrrolidin, N-n-Pentylpyrrolidin, N,N-Dimethylcyclohexylamin, N,N-Diethylcyclohexylamin, N,N-Di-n-butylcyclohexylamin, N-n-Propylpiperidin, N-iso-Propylpiperidin, N-n-Butyl-piperidin, N-sek-Butylpiperidin, N-tert-Butylpiperidin, N-n-Pentylpiperidin, N-n-Butylmorpholin, N-sek-Butylmorpholin, N-tert-Butylmorpholin, N-n-Pentylmorpholin, N-Benzyl-N-ethylanilin, N-Benzyl-N-n-propylanilin, N-Benzyl-N-iso-propylanilin, N-Benzyl-N-n-butylanilin, N,N-Dimethyl-p-toluidin, N,N-Diethyl-p-toluidin, N,N-Di-n-butyl-p-toluidin, Diethylbenzylamin, Di-n-propylbenzylamin, Di-n-butylbenzylamin, Diethylphenylamin, Di-n-Propylphenylamin und Din-Butylphenylamin.

Bevorzugte tertiäre Amine sind Di-iso-propylethylamin, Diethyl-tert-butylamin, Di-isopropylbutylamin, Di-n-butyl-n-pentylamin, N,N-Di-n-butylcyclohexylamin sowie tertiäre Amine aus Pentylisomeren.

Besonders bevorzugte tertiäre Amine sind Di-n-butyl-n-pentylamin und tertiäre Amine aus Pentylisomeren. Ein weiteres bevorzugtes tertiäres Amin, das drei identische Reste aufweist, ist Triallylamin.

Ein besonders bevorzugtes quartäres Ammoniumion ist Methyltributylammonium.

Weitere geeignete Kationen sind Guanidiniumionen der allgemeinen Formel (IV) 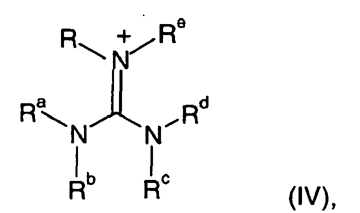 worin
R die vorstehend definierte Bedeutung hat,
und die Reste R^{a} bis R^{e} unabhängig voneinander einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen bedeuten, wobei die Reste R^{a} und R^{c} unabhängig voneinander zusätzlich auch für Wasserstoff stehen können; oder
jeweils unabhängig voneinander die Reste R^{a} und R^{b} und/oder R^{c} und R^{d} zusammen mit einem zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen bedeuten und die verbleibenden Reste/der verbleibende Rest wie zuvor definiert sind/ist; oder
die Reste R^{b} und R^{c} zusammen einen zweibindigen, Kohlenstoff enthaltenden organischen, gesättigten oder ungesättigten, acyclischen oder cyclischen, aliphatischen, aromatischen oder araliphatischen, unsubstituierten oder 1 bis 5 Heteroatome oder funktionelle Gruppen unterbrochenen oder substituierten Rest mit 1 bis 30 Kohlenstoffatomen bedeuten und die verbleibenden Reste wie zuvor definiert sind. Im Übrigen haben die Reste R^{a} - R^{e} die vorstehend für R^{a}-R^{c} definierten Bedeutungen.

Als Anionen sind prinzipiell alle Anionen einsetzbar.

Das Anion [Y]ⁿ⁻ der ionischen Flüssigkeit ist beispielsweise ausgewählt aus
- der Gruppe der Halogenide und halogenhaltigen Verbindungen der Formel: F⁻, Cl⁻, Br⁻, I⁻, BF₄⁻, PF₆⁻, AlCl₄⁻, Al₂Cl₇⁻, Al₃Cl₁₀⁻, AlBr₄⁻, FeCl₄⁻, BCl₄⁻, SbF₆⁻, AsF₆,⁻ ZnCl₃⁻, SnCl₃⁻, CuCl₂⁻, CF₃SO₃⁻, (CF₃SO₂)₂N⁻, CF₃CO₂⁻, CCl₃CO₂⁻, CN⁻, SCN⁻, OCN⁻
- der Gruppe der Sulfate, Sulfite und Sulfonate der allgemeinen Formel: SO₄²⁻, HSO₄⁻, SO₃²⁻, HSO₃⁻, R^{a}OSO₃⁻, R^{a}SO₃⁻
- der Gruppe der Phosphate der allgemeinen Formel PO₄³⁻, HPO₄²⁻, H₂PO₄⁻, R^{a}PO₄²⁻, HR^{a}PO₄⁻, R^{a}R^{b}PO₄⁻
- der Gruppe der Phosphonate und Phosphinate der allgemeinen Formel: R^{a}HPO₃⁻,R^{a}R^{b}PO₂⁻, R^{a}R^{b}PO₃⁻
- der Gruppe der Phosphite der allgemeinen Formel: PO₃³⁻, HPO₃²⁻, H₂PO₃⁻, R^{a}PO₃²⁻, R^{a}HPO₃⁻, R^{a}R^{b}PO₃⁻
- der Gruppe der Phosphonite und Phosphinite der allgemeinen Formel: R^{a}R^{b}PO₂⁻, R^{a}HPO₂⁻, R^{a}R^{b}PO⁻, R^{a}HPO⁻
- der Gruppe der Carbonsäuren der allgemeinen Formel: R^{a}COO⁻
- der Gruppe der Borate der allgemeinen Formel: - BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)₄⁻, B(R^{a}SO₄)₄⁻
- der Gruppe der Boronate der allgemeinen Formel: R^{a}BO₂²⁻, R^{a}R^{b}BO⁻
- der Gruppe der Carbonate und Kohlensäureester der allgemeinen Formel: HCO₃⁻, CO₃²⁻, R^{a}CO₃⁻
- der Gruppe der Silikate und Kieselsäuresäureester der allgemeinen Formel: SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻
- der Gruppe der Alkyl- bzw. Arylsilan-Salze der allgemeinen Formel: R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻, R^{a}R^{b}SiO₃²⁻
- der Gruppe der Carbonsäureimide, Bis(sulfonyl)imide und Sulfonylimide der allgemeinen Formel: 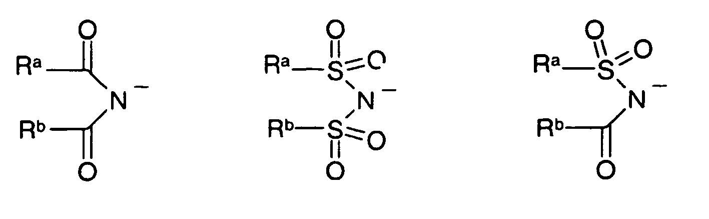
- der Gruppe der Alkoxide und Aryloxide der allgemeinen Formel: RaO-
- der Gruppe der komplexen Metallionen wie Fe(CN)₆³⁻, Fe(CN)₆⁴⁻, MnO₄⁻, Fe(CO)₄⁻

Darin bedeuten R^{a}, R^{b}, R^{c} und R^{d} unabhängig voneinander jeweils Wasserstoff, C₁-C₁₈-Alkyl, gegebenenfalls durch ein oder mehrere nicht-benachbarte Sauerstoff-und/oder Schwefelatome und/oder ein oder mehrere substituierte oder unsubstituierte Iminogruppen unterbrochenes C₂-C₁₈-Alkyl, C₆-C₁₄-Aryl, C₅-C₁₂-Cycloalkyl oder einen fünf- bis sechsgliedrigen, Sauerstoff-, Stickstoff- und/oder Schwefelatome aufweisenden Heterocyclus, wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

Darin sind gegebenenfalls durch funktionelle Gruppen, Aryl, Alkyl, Aryloxy, Alkyloxy, Halogen, Heteroatome und/oder Heterocyclen substituiertes C₁-C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, α,α-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenlythioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Iminogruppen unterbrochenes C₂-C₁₈-Alkyl sind beispielsweise 5-Hydroxy-3-oxapentyl, 8-Hydroxy-3,6-dioxaoctyl, 11-Hydroxy-3,6,9-trioxaundecyl, 7-Hydroxy-4-oxaheptyl, 11-Hydroxy-4,8-dioxaundecyl, 15-Hydroxy-4,8,12-trioxapentadecyl, 9-Hydroxy-5-oxanonyl, 14-Hydroxy-5,10-oxatetradecyl, 5-Methoxy-3-oxapentyl, 8-Methoxy-3,6-dioxaoctyl, 11-Methoxy-3,6,9-trioxaundecyl, 7-Methoxy-4-oxaheptyl, 11-Methoxy-4,8-dioxaundecyl, 15-Methoxy-4,8,12-trioxapentadecyl, 9-Methoxy-5-oxanonyl, 14-Methoxy-5,10-oxatetradecyl, 5-Ethoxy-3-oxapentyl, 8-Ethoxy-3,6-dioxaoctyl, 11-Ethoxy-3,6,9-trioxaundecyl, 7-Ethoxy-4-oxaheptyl, 11-Ethoxy-4,8-dioxaundecyl, 15-Ethoxy-4,8,12-trioxapentadecyl, 9-Ethoxy-5-oxanonyl oder 14-Ethoxy-5,10-oxatetradecyl.

Bilden zwei Reste einen Ring, so können diese Reste gemeinsam beispielsweise als anellierter Baustein 1,3-Propylen, 1,4-Butylen, 2-Oxa-1,3-propylen, 1-Oxa-1,3-propylen, 2-Oxa-1,3-propenylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen bedeuten.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rests oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methylimino-, iso-Propylimino, n-Butylimino oder tert-Butylimino sein.

Unter dem Begriff "funktionelle Gruppen" sind beispielsweise die folgenden zu verstehen: Carboxy, Carboxamid, Hydroxy, Di-(C₁-C₄-Alkyl)-amino, C₁-C₄-Alkyloxycarbonyl, Cyano oder C₁-C₄-Alkoxy. Dabei ist C₁ bis C₄-Alkyl Methyl, Ethyl, Propyl, Isopropyl, n-Butyl, sec-Butyl oder tert.-Butyl.

Gegebenenfalls durch funktionelle Gruppen, Aryl, Alkyl, Aryloxy, Alkyloxy, Halogen, Heteroatome und/oder Heterocyclen substituiertes C₆-C₁₄-Aryl sind beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, lsopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Gegebenenfalls durch funktionelle Gruppen, Aryl, Alkyl, Aryloxy, Halogen, Heteroatome und/oder Heterocyclen substituiertes C₅-C₁₂-Cycloalkyl sind beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie Norbornyl oder Norbornenyl.

Ein fünf- bis sechsgliedriger, Sauerstoff-, Stickstoff- und/oder Schwefelatome aufweisender Heterocyclus ist beispielsweise Furyl , Thiophenyl, Pyryl, Pyridyl, Indolyl, Benzoxazolyl, Dioxolyl, Dioxyl, Benzimidazolyl, Benzthiazolyl, Dimethylpyridyl, Methylchinolyl, Dimethylpyryl, Methoxifuryl, Dimethoxipyridyl, Diflourpyridyl, Methylthiophenyl, Isopropylthiophenyl oder tert.-Butylthiophenyl.

Besonders bevorzugt als Anionen sind Chlorid Cl⁻, Acetat CH₃COO⁻, Trifluoracetat CF₃COO⁻, Triflat CF₃SO₃⁻, Sulfat SO₄²⁻, Hydrogensulfat HSO₄⁻, Methylsulfat CH₃OSO₃⁻, Ethylsulfat C₂H₅OSO₃⁻, Sulfit SO₃²⁻, Hydrogensulfit HSO₃⁻, Phosphat PO₄³⁻, Hydrogenphosphat HPO₄²⁻, Dihydrogenphosphat H₂PO₄⁻, Carbonat CO₃²⁻, Hydrogencarbonat HCO₃⁻, Sulfonat, Tosylat CH₃C₆H₄SO₃⁻, Bis(trifluormethylsulfonyl)imid (CF₃SO₂)₂N⁻, Dicyanamid, Thiocyanat, Tetracyanoborat, Salicylat.

Besonders bevorzugt sind ionische Flüssigkeiten, die als Kation ein substituiertes Imidazolium-, H-Pyrazolium, Pyridinium-, Pyrrolidonium- oder ein Phosphonium-Kation aufweisen.

Besonders bevorzugt sind ionische Flüssigkeiten, die nicht korrosiv oder sogar passivierend wirken. Hierzu zählen insbesondere ionische Flüssigkeiten mit Sulfat-, Phosphat-, Borat- oder Silikatanionen. Besonders bevorzugt sind Lösungen von anorganischen Salzen in ionischen Flüssigkeiten sowie Metallkationen-haltige ionische Flüssigkeiten des Typs [A¹]⁺ [M¹]⁺ [Y]²⁻, die eine verbesserte Temperaturstabilität der ionischen Flüssigkeit bewirken. Insbesondere bevorzugt hierfür sind Alkali- und Erdalkalimetalle bzw. deren Salze.

Das erfindungsgemäße Verfahren weist zahlreiche Vorteile auf: Durch die Überlagerung von Reaktion und Trennung in einer Kolonne kann bei gleichgewichtslimitierten Reaktionen der Umsatz durch die Abtrennung eines oder mehrerer Produkte erhöht werden. Es kann hier je nach Umständen ein vollständiger Umsatz erreicht werden.
Die Produkte können mit Hilfe der Destillation entweder über Kopf oder Sumpf abgezogen werden. Ist der Trennfaktor zwischen einem Produkt und eine Edukt bzw. einer Nebenkomponente klein oder liegt gar ein Azeotrop vor, so erweist sich das erfindungsgemäße Verfahren als besonders vorteilhaft: Durch die Zugabe einer geeigneten ionischen Flüssigkeit als Entrainer kann die Trennung nachhaltig verbessert werden.

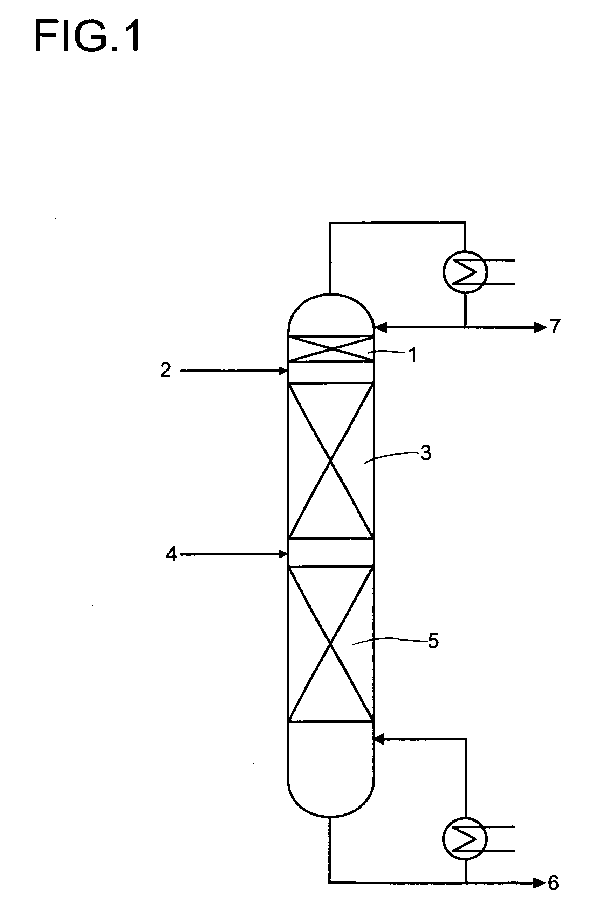

Die Wahl der jeweils besonders geeigneten ionischen Flüssigkeit hängt von den Bedingungen der konkreten Trennaufgabe ab und kann vom Fachmann ermittelt werden. Mittels des erfindungsgemäßen Verfahrens kann somit reineres Produkt über Kopf der Kolonne abgezogen werden. Weiterhin wird der Umsatz gesteigert, da Nebenkomponenten und Edukte in der Kolonne und damit in der Reaktionszone verbleiben. Ein weiterer Vorteil des erfindungsgemäßen Verfahrens ist, dass die Selektivität durch Unterdrückung von reversiblen Nebenreaktionen verbessert werden kann. Dieses wird dadurch erreicht, dass entstehende Nebenkomponenten aufgrund ihres Siedeverhaltens in die Reaktionszone zurückgedrängt werden. Besonders vorteilhaft erweist sich hier, dass Ionische Flüssigkeiten selektiver als herkömmliche Entrainer trennen. Sie ermöglichen durch ihre vergleichsweise große Trennselektivität, dass im Vergleich zur konventionellen Entrainern ein geringerer Entrainermassenstrom der Reaktivextraktivdestillation zugeführt und/oder die Trennstufenanzahl in der Kolonne verringert werden kann. Das erfindungsgemäße Verfahren ist verfahrenstechnisch einfacher und kostengünstiger, da Reaktion oder Reaktivdestillation mit der Extraktivdestillation in einer Kolonne durchgeführt werden können und eine weitere Aufarbeitung der Produktströme entweder gar nicht mehr nötig ist oder erheblich einfacher ausfallen kann. Ferner entfallen die Trennelemente 1 in Figur 1, da ein Austrag von Anteilen der ionischer Flüssigkeit über die Dampfphase aufgrund ihrer äußerst geringen Flüchtigkeit nicht möglich ist. Der niedrige Dampfdruck ermöglicht auch, dass verschiedene Trennoperationen zur Abtrennung des Entrainers vom Sumpfprodukt verwendet werden können, die im Vergleich zur zweiten Destillationskolonne, die bei der konventionellen Extraktivdestillation notwendig ist, einen Vorteil bezüglich Betriebs- und Investitionskosten ermöglichen. Ein weiterer Vorteil des erfindungsgemäßen Verfahrens ist, dass bei exothermen Reaktionen Verdampferenergie eingespart werden kann, da die Reaktionsenthalpie in der Kolonne zur Verdampfung genutzt wird.

Neben den rein trennwirksamen Ionischen Flüssigkeiten können sich für das erfindungsgemäße Verfahren auch katalytisch wirksame eignen. Insbesondere saure oder basische Ionische Flüssigkeiten sind geeignet verschiedenste Reaktionen zu katalysieren (Veresterungen, Veretherungen, Hydrierungen) und damit den Prozess noch effektiver zu gestalten. Dann wirkt die Ionische Flüssigkeit als homogener Katalysator und wird dazu bevorzugt am Kopf der Kolonne zugeführt. Nach katalytischer Wirkung tritt sie am Sumpf der Kolonne aus und kann einfach von den anderen Komponenten in einer Verdampferstufe abgetrennt werden, da sie keinen Dampfdruck hat.

Besonders vorteilhaft ist die Verfahrensvariante, bei der die Ionischen Flüssigkeit sowohl katalytisch als auch als Extraktionsmittel wirkt. Sie beschleunigt dann die Reaktion und erhöht gleichzeitig die Trennleistung.

Besonders geeignete Reaktionen bei denen die Überlagerung von Extraktivdestillation und Reaktion sich positiv auswirkt sind z.B. Veresterungen, Umesterungen, Veretherungen Hydrierungen, Dehydrierungen, Alkylierungen etc.. Es eignen sich alle Reaktionen, bei denen kleine Moleküle frei werden, die aufgrund ihres hohen Dampfdruckes über Kopf der Destillationskolonne abgezogen werden können. Ferner eignen sich Reaktionen, die schnell ablaufen und bei denen das chemische Gleichgewicht auf der Seite der Edukte liegt.

Gute katalytische Eigenschaften haben saure oder basische Ionische Flüssigkeiten. Saure Ionische Flüssigkeiten haben entweder ein saures Anion, wie z. B. das Hydrogensulfat oder das Diehydrogenphosphat oder eine weitere Säuregruppe im Kation der Ionischen Flüssigkeit, wie z.B. eine Sulfonylgruppe an einem Alkylrest eines Dialkylimidazoliumions. Basische IL haben basisch wirkende Anionen, wie z.B. Acetate.

In einer vorteilhaften Version des Verfahrens wird in der ersten Kolonne, in der Reaktion und Extraktivdesillation ablaufen ein Kopfprodukt abgezogen, dass noch nicht die vollständige Endreinheit erreicht hat. Dieses Produkt wird einer zweiten Destillationskolonne zugeführt und dort endgereinigt. Die zweite Kolonne ist frei an ionischer Flüssigkeit. Daher fällt das Leitsiederazeotrop am Kopf der Kolonne an. Mit ihm werden die restlichen Nebenprodukte über Kopf abgetrennt, und das Endprodukt fällt am Sumpf an. Dort kann es entweder direkt als flüssiges Sumpfprodukt entnommen werden oder als dampfförmiger Seitenstrom. Um Verluste zu minimieren kann der Kopfstrom der zweiten Kolonne zur ersten Kolonne zurückgeführt werden. Bei dieser Verfahrensvariante wird die erste Kolonne entlastet. Dadurch kann sie einfacher auf die Reaktionsleistung optimiert werden und ihre Regelung wird einfacher.

Im folgenden wird das erfindungsgemäße Verfahren anhand der Figuren exemplarisch näher beschrieben.

Die Edukte werden über den Zulauf (4) der Kolonne, in der Reaktivdestillation und Extraktivdestillation ablaufen, zugeführt. Es besteht die Möglichkeit, dass ein Reaktor vorgeschaltet ist, um den Umsatz der Reaktion schon in die Nähe der Gleichgewichtszusammensetzung zu bringen. Der Strom (2) ist der Zufluss der ionischen Flüssigkeit (Entrainer) . In den Elementen (3) und (5) findet die Reaktion und die gewünschte Trennung zwischen Kopf- und Sumpfprodukt unter Wirkung der Ionischen Flüssigkeit statt. Reaktion und Trennung können simultan oder nacheinander in der Kolonne ablaufen. Strom (6) ist der Sumpfproduktstrom. Trennelemente können beispielsweise Böden, geordnete Packungen oder Füllkörper sein. Die Reaktion kann homogen, heterogen oder unkatalysiert ablaufen. Bei heterogen katalysierter Reaktion ist der Katalysator in den Elementen 3 und/oder 5 enthalten. Bei heterogen katalysierter Reaktion kann es auch vorteilhaft sein, Teile der Elemente 3 und 5 ohne Katalysator auszustatten, d.h. als reine Trennelemente zu verwenden. Bei einer homogen katalysierten Reaktion kann die Ionische Flüssigkeit selbst der Katalysator sein.

Die Verwendung von Ionischer Flüssigkeit als Entrainer hat den Vorteil, dass der Dampfdruck der reinen ionischen Flüssigkeit und damit auch ihr Partialdruck in der Mischung mit dem Kopfprodukt annähernd gleich null sind. Damit können die Trennelemente (1) entfallen. Diese ist nur dann nicht der Fall, wenn flüchtige Verunreinigungen in der zugeführten Ionischen Flüssigkeit enthalten sind, die z.B. beim Recycling nicht vollständig abgetrennt werden konnten oder Mischungen von Ionischen Flüssigkeiten mit herkömmlichen Lösungsmitteln als Entrainer eingesetzt werden. Um diese vom Kopfprodukt zu trennen, ist u.U. doch ein Verstärkungsteil zwischen Zugabestelle der Ionischen Flüssigkeit und dem Kopf der Kolonne notwendig.

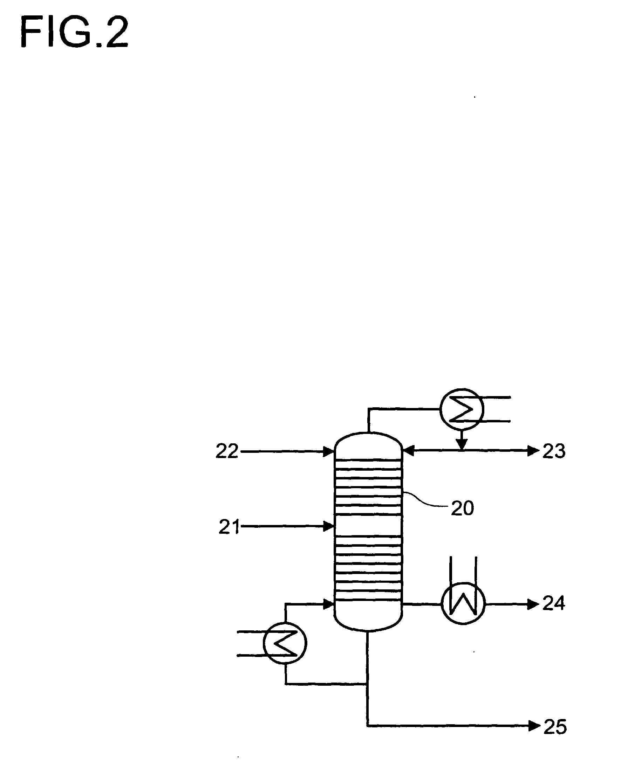

Eine vorteilhafte Variante des erfindungsgemäßen Verfahrens ist exemplarisch in Figur 2 dargestellt. Der Kolonne (20) wird über Leitung (21) der Feed und Leitung (22) die ionische Flüssigkeit zugeführt. Über Leitung (23) wird der Kopfstrom abgeführt. Die Entrainerwirkung und je nach Reaktionssystem eventuell die katalytische Wirkung findet auf den Böden der Kolonne statt. Im Abtriebsteil der Kolonne werden der oder die Leichtsieder (LS) von dem oder den Schwersiedern (SS) und der ionischer Flüssigkeit (IL) abgetrennt, so dass im Sumpf kein Leichtsieder mehr vorhanden ist. Dieses ist durch eine ausreichende Trennstufenzahl im Abtriebsteil für den Fachmann der Destillation erreichbar, wenn die IL eine Selektivität von größer 1,3 bewirkt, was Ihre Aufgabe ist. Da die IL keinen Dampfdruck besitzt, besteht die Dampfphase im Sumpf vollständig aus Schwersieder. Dieser wird durch einen dampfförmiger Seitenstrom (24) abgezogen. Die Auslegung dieses Seitenstroms und der notwendigen Apparate erfolgt nach den üblichen Regeln der Destillation und sind von der jeweilig konkret vorliegenden Trennaufgabe abhängig. Da der Trennfaktor zwischen IL und SS unendlich groß ist, reicht eine Verdampfungsstufe zur Erreichung einer hohen Reinheit an SS aus. Für den Fall, dass andere schwersiedende Verunreinigungen vorhanden sind, bzw. im Sumpf entstehen oder ein Gemisch aus IL und herkömmlichen Lösungsmittel als Entrainer verwendet wurde, sind weitere Trennelemente (Seitenstromkolonne) notwendig.

Das schwersiedende Produkt wird mit dem Seitenstrom bevorzugt im Abtriebsteil nahe am Sumpf, besonders bevorzugt von einer der 3 untersten Stufen, ganz besonders bevorzugt direkt von der untersten Stufe aus dem Sumpf abgezogen.

Die optimale Menge des Seitenstroms hängt von der zulässigen Temperatur im Sumpf der Extraktivdestillation ab. Je größer der Strom, desto mehr SS wird aus dem Abtriebsteil der Kolonne entfernt und weniger SS ist im IL und damit im Sumpf enthalten. Folglich steigt die Temperatur im Sumpf, denn die IL hat keinen Dampfdruck. Hier sind die thermische Stabilität der Komponenten im Sumpf und die Belastbarkeit des Materials zu berücksichtigen. Ziel ist ein möglichst niedriger SS-Gehalt in der IL ohne thermische Schäden hervorzurufen. Je nach Stoffgemisch und Betriebsdruck kann die zulässige Sumpftemperatur von 50°C bis über 200°C betragen. Bevorzugt liegt sie zwischen 100 und 200°C. Wegen der thermischen Stabilität gängiger ionischer Flüssigkeiten sollten 250°C, bevorzugt 200°C nicht überschritten werden. Ein weiterer Aspekt bei der Optimierung der Sumpftemperatur ist der Energieverbrauch. Mit steigender Sumpftemperatur steigt auch der Energieverbrauch, da die Ionische Flüssigkeit erwärmt und bevor sie zum Kopf der Kolonne recycelt werden kann, wieder abgekühlt werden muss.

Über den Seitenstrom kann der Gehalt an SS im IL stark erniedrigt werden. Erreichbar sind Gehalte an SS in IL von kleiner 10 %, bevorzugt kleiner 5 %, besonders bevorzugt kleiner 1 %, wobei die erreichbaren Werte von Druck und zulässiger Temperatur im Kolonnensumpf abhängen. Vorteilhaft für die Abreicherung des SS aus der IL sind neben der hohen Temperatur ein hoher Dampfdruck des SS und ein niedriger Kolonnendruck. Die angegebenen Konzentrationen sind, wenn nicht anders gekennzeichnet, auf die Masse bezogen, d.h. % bedeuten Gewichts-% und ppm bedeuten Gewichts-ppm.

Soll der SS als flüssiges Produkt anfallen, so ist der dampfförmige Seitenstrom mit Hilfe eines zusätzlichen Kondensators zu verflüssigen.

Mittels Leitung (25) wird der Sumpfstrom aus der Kolonne (20) abgeführt, In nachgeschalteten Verfahrensschritten wie Verdampfung und / oder Strippung kann weiterer Schwersieder, welcher in diesem Gemisch noch enthalten ist, abgetrennt werden.

Das erfindungsgemäße Verfahren ermöglicht durch den Seitenstrom die Abreicherung des Schwersieders im von der Kolonne anfallenden Sumpfstrom. Diese Abreinigung kann in einigen Anwendungsfällen in ihrer Qualität schon genügen, so dass der im Sumpf anfallende Ionische Flüssigkeits-reiche Strom direkt zum Kolonnenkopf zurückgeführt wird, um somit die ionische Flüssigkeit erneut als Entrainer zu verwenden.

Aus wirtschaftlichen Gründen sollte die Ionische Flüssigkeit im Kreislauf gefahren werden, d.h. SS, der in der IL verblieben ist, wird mit ihr wieder zum Kopf der Extraktiv-Rektifikation geführt. Dort wird ein Teil des SS in die Dampfphase gelangen und das Kopfprodukt (LS) verunreinigen. Wenn die Reinheitsanforderungen für den LS moderat sind, dann reicht die Abreicherung des SS im IL alleine durch den dampfförmigen Seitenstrom aus, und es ist keine weitere Aufarbeitung der IL nötig. In dieser besonders vorteilhaften Variante kann die Extraktivreaktivdestillation bereits in einer Kolonne durchgeführt werden. Gegenüber einer normalen Reaktion gefolgt von einer Extraktivdestillation, die immer eine zweite Kolonne zur Aufarbeitung des Entrainers benötigt, bedeutet das eine beachtliche Vereinfachung des Verfahrens sowie erhebliche Einsparung an Investitionskosten.

Im Falle erhöhter Anforderungen oder einer noch nicht befriedigenden Abreicherung von Schwersieder im Sumpfstrom kann sich vor einer Rückführung dieses Stroms in die Kolonne eine weitere Aufarbeitung empfehlen, um einer unerwünschten Verunreinigung des Kopfproduktes zu begegnen. Hierzu wird dieser entnommene Sumpfstrom einem Verdampfer und / oder einer Strippkolonne zugeführt, in welcher noch enthaltene Reste an Schwersieder weiter verringert werden. Im Anschluss wird die so gewonnene ionische Flüssigkeit der Kolonne wieder zugeführt. Der große Vorteil dieser Verfahrensvariante, ist dass der Schwersiedergehalt in der IL durch den Seitenstrom deutlich verringert werden kann und eine nachfolgende Abtrennung des restlichen Schwersieders von der IL erleichtert wird.

Wird z.B. eine Verdampferstufe bei Unterdruck verwendet um die restliche Schwersieder aus der IL abzutrennen, so müssen die Schwersiederdämpfe bei diesem Unterdruck kondensiert werden. Ist die Reinheitsanforderung an die recycelte IL hoch, so muss die Temperatur hoch und gleichzeitig der Druck sehr niedrig gewählt werden, damit der Schwersieder aus der IL verdampft. Dann sind sehr niedrigen Temperaturen im Kondensator nötig, um den Schwersiederdampf niederzuschlagen und auf Umgebungsdruck zu komprimieren. Meist ist eine Kältemaschine notwendig, um quantitativ zu kondensieren. Da Kälteenergie teurer ist als Kühlwasser, ist es billiger den Schwersieder im Kondensator des Seitenstroms niederzuschlagen als im Kondensator des nachgeschalteten Verdampfers bei Unterdruck. Ähnliches gilt für die Abtrennung des Schwersieders aus der IL über eine Strippung mit Inertdampf. Auch über diese Version kann die IL auf sehr niedrige Schwersiedergehalte gereinigt werden. Je größer der Schwersiedergehalt ist, desto mehr Inertgas ist notwendig. Um den Schwersieder aus dem Inertgas zu kondensieren, sind große Wärmeübertragerflächen nötig und auch hier wird, wenn die Verluste an Schwersieder gering sein sollen, eine Kältemaschine nötig sein. Einfacher ist daher, den Schwersieders mit dem Inertgas zur Verbrennung oder wenn möglich an die Umwelt zu geben (SS = Wasser). Daher ist es vorteilhaft, den Großteil des Schwersieders über den Seitenstrom abzuziehen und den Schwersiederanteil aus der Feinreinigung der Ionischen Flüssigkeit zu entsorgen.

### Beispiele

### Beispiel: Reaktivextraktivdestillation von Methanol und Borsäure zu Trimethylborat und Wasser

### Beschreibung der Apparatur

Die Versuchsapparatur bestand aus einem Dünnschichtverdampfer aus Glas, auf den eine Destillationskolonne (Höhe 5 m, Durchmesser 30 mm) aufgesetzt war. Die Kolonne bestand aus 5 Schüssen aus Glas mit je 14 Glockenböden. Die Kolonne war in regelmäßigen Abständen mit Thermoelementen bestückt, so dass außer im Sumpf und am Kopf der Kolonne auf jedem 3. bis 4. Boden die Temperatur gemessen werden konnte. Zusätzlich zum Temperaturprofil konnte mit Hilfe entsprechender Probenahmestellen das Konzentrationsprofil in der Kolonne ermittelt werden. Die Feedlösung wurde aus einem auf einer Waage stehendem Vorlagebehälter massenstromgeregelt zugeführt. Der Verdampfer hatte einen Holdup von etwa 100 ml und wurde mittels eines Thermostaten beheizt. Der Sumpfaustrag wurde in einen Behälter auf eine Waage und von dort weiter in einen zweiten Dünnschichtverdampfer (DSV) gepumpt. Im DSV wurden bei hohen Temperaturen unter Vakuum die flüchtigen Komponenten verdampft und in einem nachgeschalteten Kondensator, der mit einem Kryostaten gekühlt wurde, kondensiert. Der Sumpfaustrag des DSV wurde in die oberste Stufe der Destillationskolonne zurückgeführt. Vorher wurde er auf die Temperatur der obersten Stufe heruntergekühlt. Das Destillat der Destillationskolonne wurde in einem mit Kühlwasser gekühlten Kondensator auskondensiert, in ein Sammelgefäß geführt und von dort zum Teil als Rücklauf in die Kolonne zurückgeführt und zum Teil über eine Waage geregelt ausgetragen. Alle ein- und austretenden Stoffströme sowie die gemessenen Temperaturen und Drücke wurden mit einem Prozessleitsystem kontinuierlich erfasst. Um Stationarität zu erreichen wurde die Anlage im 24-Stunden Betrieb gefahren.

### Versuchsdurchführung

Als Feedstrom wurden Borsäure und Methanol (MeOH) zugeführt, die in der Destillationskolonne zu Trimethylborat (TMB) und Wasser reagierten. Die Borsäure wurde zuvor im Vorlagegefäß in Methanol gelöst. Dabei wurde ein Gewichtsverhältnis von 1:4 von Borsäure zu Methanol eingestellt. Methanol wurde im Feed im Überschuss zugegeben, um zum einen die als Feststoff vorliegende Borsäure (BS) zu lösen und zum anderen einen vollständigen Umsatz der Borsäure zu gewährleisten. Der Zulaufstrom betrug 220 g/h und wurde auf den 35. Boden gegeben. Die Ionische Flüssigkeit (IL) wurde am Kopf der Kolonne mit einem Massenstrom von 500 g/h zugegeben und wusch MeOH und Wasser nach unten. Damit wurde das Leichtsiederazeotrop aus TMB und MeOH gebrochen und TMB wurde als fast reines Destillat erhalten. Die Destillatreinheit betrug 99,3 % TMB. Der Destillatmengenstrom betrug 77 g/h und der Rücklauf 600 g/h. Am Kopf des zweiten DSV wurden 140 g/h abgezogen, die 73 % Methanol und 27 % Wasser enthielten. Der TMB Anteil darin lag unter 0,01 %. Die Borsäure wurde in der Kolonne vollständig umgesetzt. Der Dünnschichtverdampfer zur Reinigung der IL wurde bei 50 mbar und bei einer Temperatur von 175°C betrieben. Der Druck in der Destillationskolonne betrug 1 bar.

### Beispiel: Umesterung von Ethylacetat zu Methylacetat

Reaktionsgleichung:
Ethylacetat + Methanol <=> Methylacetat + Ethanol

Azeotrope:
Ethylacetat/Ethanol, Methylacetat/Methanol
IL : MIAHSO4 - Methylimidazoliumhydrogensulfat

Es wurde die gleiche Apparatur verwendet. Der Zulauf war 400 g/h mit 27% MeOH und 73 % Ethylacetat. Die Temperatur des Zulaufs lag bei 71,5°C. 370 g/h IL (MIHS04) wurden am Kopf der Kolonne zugegeben. Das Rücklaufverhältnis lag bei 1,5. Über Kopf der Kolonne konnte Methylacetat mit einer Reinheit von 99,9 % und einer Menge von ca. 247 g/h gewonnen werden. Die Temperatur im Kondensator betrug ca. 57°C. Am Sumpf der Kolonne (1. Dünnschichtverdampfer) fiel ein Gemisch aus ca. 29 % Ethanol und 71 % IL bei ca. 92°C an. Am Kopf des zweiten Dünnschichtverdampfers (50 mbar) konnte 153 g/h Ethanol mit einer Reinheit von 99,9 % aus der IL gewonnen werden. Die zurückgeführte IL hatte nur noch geringe Verunreinigungen an Leichtsiedern (130 ppm Ethanol, 50 ppm Ethylacetat, 50 ppm Methanol). Der zweite Dünnschichtverdampfer hatte eine Heizmitteltemperatur von 165°C.

### Ergebnis:

Die IL bricht das Azeotrop Methylacetat und Methanol, so dass Methylacetat über Kopf rein gewonnen werden kann. Gleichzeitig katalysiert sie die Umesterung als saure IL. Nahezu kein Ethylacetat wird im Sumpf des zweiten Dünnschichtverdampfers nachgewiesen. Im Sumpf macht die IL Ethanol zum Schwersieder, so dass es über den Sumpf dampfförmig abgezogen werden kann. Dass Gleichgewicht der Reaktion wird stark auf die Seite des Methylacetats geschoben, da beide Produkte abgezogen werden können und die Edukte in die Reaktionszone zurückgedrängt werden. Der Umsatz liegt bei nahezu 100 %.

## Patentansprüche

1. Verfahren zur chemischen Umsetzung und Auftrennung eines Gemisches in einer Kolonne, **dadurch gekennzeichnet, dass** man in der Kolonne einer Reaktivdestillation zumindest teilweise eine Extraktivdestillation überlagert und eine ionische Flüssigkeit als Entrainer in die Kolonne leitet.

2. Verfahren nach Anspruch 1, **dadurch gekennzeichnet, dass** man die Reaktion und Extraktion kontinuierlich durchführt und bei der Umsetzung mindestens eines der Reaktionsprodukte aus dem Reaktionsgemisch destillativ abtrennt.

3. Verfahren nach Ansprüchen 1 bis 2, **dadurch gekennzeichnet, dass** man eine für die Reaktion katalytisch wirkende ionische Flüssigkeit einsetzt.

4. Verfahren nach Ansprüchen 1 bis 3, **dadurch gekennzeichnet, dass** man die ionische Flüssigkeit am Kopf der Kolonne zuführt.

5. Verfahren nach Ansprüchen 1 bis 4, **dadurch gekennzeichnet, dass** man Schwersieder aus der Kolonne mittels eines Seitenabzugs dampfförmig abführt.

6. Verfahren nach den Ansprüchen 1 bis 5, **dadurch gekennzeichnet, dass** die Menge der Ionischen Flüssigkeit so eingestellt wird, dass sich im Verstärkungsteil (Kolonnenteil zwischen Entrainer- und Feedzugabe) Konzentrationen der IL zwischen 10 und 90 Gew-% einstellen.

7. Verfahren nach den Ansprüchen 1 bis 6, **dadurch gekennzeichnet, dass** das Kopfprodukt der Kolonne einer Feinreinigungsdestillation in einer zweiten Kolonne unterzogen wird.

8. Verfahren nach dem Anspruch 7, **dadurch gekennzeichnet, dass** das Kopfprodukt der zweiten Kolonne zur ersten Kolonne zurückgeführt wird und das Wertprodukt am Sumpf der 2. Kolonne entnommen wird.

9. Verwendung des beanspruchten Verfahrens nach Ansprüchen 1 bis 8 für Kondensationsreaktionen.

10. Verwendung des beanspruchten Verfahrens nach Ansprüchen 1 bis 8 für Veresterungen.

11. Verwendung des beanspruchten Verfahrens nach Ansprüchen 1 bis 8 für Veretherungen.

12. Verwendung des beanspruchten Verfahrens nach Ansprüchen 1 bis 8 für Hydrierungen oder Dehydrierungen.

## Claims

1. A process for chemical reaction and separation of a mixture in a column, wherein an extractive distillation is at least partially superimposed on a reactive distillation in the column and an ionic liquid is introduced as entrainer into the column.

2. The process according to claim 1, wherein the reaction and extraction are carried out continuously and at least one of the reaction products is separated off from the reaction mixture by distillation during the reaction.

3. The process according to claim 1 or 2, wherein an ionic liquid having a catalytic effect in respect of the reaction is used.

4. The process according to any of claims 1 to 3, wherein the ionic liquid is introduced at the top of the column.

5. The process according to any of claims 1 to 4, wherein high boilers are removed in vapor form from the column by means of a side offtake.

6. The process according to any of claims 1 to 5, wherein the amount of ionic liquid is set so that concentrations of the IL of from 10 to 90% by weight are established in the enrichment section (section of the column between the points of introduction of entrainer and feed).

7. The process according to any of claims 1 to 6, wherein the overhead product from the column is subjected to a fine purification distillation in a second column.

8. The process according to claim 7, wherein the overhead product from the second column is returned to the first column and the desired product is taken off at the bottom of the 2nd column.

9. The use of the claimed process according to any of claims 1 to 8 for condensation reactions.

10. The use of the claimed process according to any of claims 1 to 8 for esterifications.

11. The use of the claimed process according to any of claims 1 to 8 for etherifications.

12. The use of the claimed process according to any of claims 1 to 8 for hydrogenations or dehydrogenations.

## Revendications

1. Procédé de réaction chimique et de séparation d'un mélange dans une colonne, **caractérisé en ce que** l'on superpose dans la colonne, à une distillation réactive, au moins en partie une distillation extractive et que l'on envoie dans la colonne un liquide ionique en tant qu'agent d'entraînement.

2. Procédé suivant la revendication 1, **caractérisé en ce que** l'on entreprend la réaction et l'extraction en continu et que, lors de la réaction, on sépare par distillation au moins l'un des produits de réaction du mélange réactionnel.

3. Procédé suivant les revendications 1 à 2,
**caractérisé en ce que** l'on met en oeuvre un liquide ionique ayant un effet catalytique sur la réaction.

4. Procédé suivant les revendications 1 à 3,
**caractérisé en ce que** l'on introduit le liquide ionique en tête de la colonne.

5. Procédé suivant les revendications 1 à 4,
**caractérisé en ce que** l'on soutire de la colonne des constituants à haut point d'ébullition via un soutirage latéral.

6. Procédé suivant les revendications 1 à 5,
**caractérisé en ce que** la quantité du liquide ionique est ajustée de sorte qu'il se forme dans la colonne de concentration (partie de colonne entre l'amenée d'agent d'entraînement et l'alimentation) des concentrations de liquide ionique (IL) de 10 à 90% en poids.

7. Procédé suivant les revendications 1 à 6,
**caractérisé en ce que** le produit de tête de la colonne est soumis à une étape de purification fine dans une deuxième colonne.

8. Procédé suivant la revendication 7, **caractérisé en ce que** le produit de tête de la deuxième colonne est renvoyé dans la première colonne et que le produit de valeur est soutiré dans le fond de la 2^{ème} colonne.

9. Utilisation du procédé revendiqué suivant les revendications 1 à 8 pour des réactions de condensation.

10. Utilisation du procédé revendiqué suivant les revendications 1 à 8 pour des estérifications.

11. Utilisation du procédé revendiqué suivant les revendications 1 à 8 pour des éthérifications.

12. Utilisation du procédé revendiqué suivant les revendications 1 à 8 pour des hydrogénations ou des déshydrogénations.
